# FASCICULE DE BREVET EUROPEEN

(11) **EP 3 261 405 B1**
(45) Date de publication et mention de la délivrance du brevet: **19.12.2018**
(21) Numéro de dépôt: 17173246.4
(22) Date de dépôt: 29.05.2017
(51) Int. Cl.: H04W 84/12, A63H 27/00, B64C 39/02, B64D 47/08, A63H 30/04, G05D 1/00

(54) **RÉSEAU LOCAL POUR L'ÉCHANGE SIMULTANÉ DE DONNÉES ENTRE UN DRONE ET UNE PLURALITÉ DE TERMINAUX UTILISATEUR, DÉSIGNANT UN TERMINAL UTILISATEUR PRINCIPAL UNIQUE CONTROLANT LE DRONE**
LOKALES NETZ FÜR DEN SIMULTANEN DATENAUSTAUSCH ZWISCHEN EINER DROHNE UND EINER VIELZAHL VON BENUTZER-ENDGERÄTEN UND BENNENUNG EINES EINZIGEN HAUPTBENUTZERS, DER DIE DROHNE STEUERN KANN
LOCAL NETWORK FOR SIMULTANEOUSLY EXCHANGING DATA BETWEEN A DRONE AND A PLURALITY OF USER TERMINALS AND ASSIGNING A MAIN SINGLE USER THAT CONTROLS THE DRONE

(30) Priorité: 23.06.2016 FR 1655838
(43) Date de publication de la demande: 27.12.2017
(73) Titulaire: Parrot Drones, 75010 Paris (FR)
(72) Inventeur: TEXIER, Nicolas, 75017 PARIS (FR)
(74) Mandataire: Dupuis-Latour, Dominique

(56) Documents cités:
- EP-A1- 2 688 309
- EP-A1- 2 933 775
- WO-A1-2016/032968
- US-A1- 2016 136 482
- ARJUNA SATHIASEELAN ET AL: "Cloudrone: Micro Clouds in the Sky", ARXIV.ORG, CORNELL UNIVERSITY LIBRARY, 201 OLIN LIBRARY CORNELL UNIVERSITY ITHACA, NY 14853, 27 avril 2016 (2016-04-27), XP080698373,

## Description

L'invention est définie par les revendications. Les exemples ou caractéristiques subsidiaires qui ne sont pas couverts par les revendications ne sont pas considérés comme faisant parti de l'invention. L'invention concerne les prises de vue video opérées à partir d'engins volants motorisés tels que des drones.

Un exemple typique de drone volant est le *Bebop* de Parrot SA, Paris, France, qui est un drone à voilure tournante de type quadricoptère.

Ces drones sont équipés d'une série de capteurs (accéléromètres, gyromètres trois axes, altimètre, etc.) et d'une caméra frontale captant une image de la scène vers laquelle se dirige le drone. Ils peuvent être avantageusement pilotés par l'intermédiaire d'un téléphone ou tablette multimedia à écran tactile et accéléromètres intégrés, par exemple un *smartphone* de type *iPhone* ou une tablette de type *iPad* (marques déposées), avec possibilité de télétransmettre les images captées par la caméra frontale du drone pour les visualiser, en temps réel, sur l'écran de cet appareil de télécommande tenu par l'utilisateur. Il s'agit d'un appareil standard, non modifié si ce n'est le chargement d'un logiciel applicatif tel que l'application mobile *Freeflight* (marque déposée) de Parrot SA pour contrôler le pilotage du drone et la visualisation des images prises par la caméra frontale embarquée.

Les demandes WO 2010/061099 A2, EP 2 364 757 A1, EP 2 613 213 A1, EP 2 450 862 A1 ou encore EP 2 613 214 A1 (Parrot) décrivent divers aspects de ces drones et de la manière de les piloter à distance.

La télécommande incorpore les divers organes nécessaires à la détection des instructions de pilotage et de contrôle du drone et à l'échange bidirectionnel de données via une liaison radio de type réseau local sans fil WiFi (IEEE 802.11) ou *Bluetooth* directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

Plus précisément, la liaison radio sans fil bidirectionnelle comprend une liaison montante (de la tablette vers le drone) et une liaison descendante (du drone vers la tablette) pour transmettre des trames de données contenant :
- (de la tablette vers le drone) les instructions de pilotage et de contrôle, envoyées à intervalles réguliers et de façon systématique, ainsi que diverses informations ou paramètres à destination du drone ;
- (du drone vers la tablette) le flux video issu de la caméra ; et
- (du drone vers la tablette) en tant que de besoin, des données de vol établies par le drone ou des indicateurs d'état tels que : niveau des batteries, phase de vol (décollage, stabilisation automatique, posé au sol, etc.), altitude, défaut détecté, etc.

La caméra video frontale (ou "caméra horizontale") est non seulement utilisable pour un pilotage "en mode immersif", c'est-à-dire où l'utilisateur se sert de l'image de la caméra de la même façon que s'il se trouvait lui-même à bord du drone, mais elle peut également servir à capter des séquences d'images d'une scène vue depuis le drone. L'utilisateur peut alors se servir du drone de la même façon que d'une caméra ou d'un camés-cope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Cette caméra peut être une caméra orientable, afin d'orienter de façon contrôlée dans une direction prédéterminée l'axe de visée, et donc le champ des images transmises avec le flux video.

Une première technique, mise en oeuvre notamment dans l'appareil *Bebop* précité et décrite dans le EP 2 933 775 A1, consiste à prévoir comme caméra frontale une caméra grand-angle haute définition munie d'un objectif à champ hémisphérique de type *fisheye* couvrant un champ d'environ 180°. L'image brute délivrée par ce capteur est fenêtrée en temps réel par un traitement logiciel, opéré par un processeur du drone, assurant la sélection des pixels utiles de l'image brute dans une zone de capture déterminée en fonction d'un certain nombre de paramètres. Ces paramètres incluent des données délivrées par la centrale inertielle (pour assurer une stabilisation de l'image qui pallie les oscillations et vibrations du drone), ainsi que diverses commandes de pointage dans la direction d'une cible particulière choisie par l'utilisateur ou suivie automatiquement par le drone.

En variante, ou même en complément, du contrôle de l'axe de visée de la caméra par un logiciel de fenêtrage, il est également possible de monter la caméra sur un support articulé trois-axes de type *gimbal* avec suspension à la Cardan, muni de servomoteurs pilotés en fonction des données gyrométriques et des commandes de pointage.

Ces techniques permettent en particulier une utilisation selon un mode dit *follow-me,* où l'utilisateur se déplace (à ski, en vélo...) et programme le drone pour que ce dernier l'accompagne automatiquement dans son déplacement, en gardant la caméra pointée sur lui. Le flux video délivré par la caméra montre ainsi l'utilisateur au centre de l'image, évoluant dans son environnement, l'utilisateur étant le spectateur de ses propres évolutions. Cette image *follow-me* peut être ensuite conservée, diffusée sur les réseaux sociaux, etc.

Concrètement, pour assurer le suivi de l'utilisateur (la cible de la poursuite) par la caméra, diverses techniques sont combinées, incluant un traitement sur le flux video recueilli par la caméra (détection de mouvement et poursuite de cible) et le traitement de données de localisation géographique de la cible, typiquement par une balise ou *tracker* GPS portée par l'utilisateur et dont les données sont transmises au drone via la liaison bidirectionnelle de données. En effet, le traitement du flux video destiné à assurer le recadrage de la cible est susceptible de se tromper et de confondre la cible réelle (l'utilisateur) avec un élément de l'environnement, tel qu'une autre personne ou un objet aux couleurs similaires par exemple. Pour contrer cet effet indésirable, le système de poursuite utilise en supplément une donnée de localisation de la cible, permettant de relier un élément vu à l'écran avec les indications du *tracker* GPS porté par la cible, avec éventuellement une gestion des priorités en cas de divergence entre les informations de poursuite video et la donnée de localisation.

Ce mode de fonctionnement correspond à une utilisation généralement narcissique de la fonctionnalité, où l'utilisateur principal est la personne ciblée, qui détient le *tracker* GPS.

Le but de la présente invention est de proposer une extension de ce mode de fonctionnement, ouvrant à des fonctionnalités sociales.

Il s'agit de faire participer plusieurs personnes au mode *follow-me*, dans des scénarios tels qu'une randonnée en famille ou de l'escalade entre amis, durant lesquelles on souhaite capturer à l'aide d'un drone des images souvenir, en prenant en compte la présence des différentes personnes présentes en plus de l'utilisateur principal pour gérer la présence de ces autres utilisateurs présents, par exemple en déportant le cadrage du logiciel de fenêtrage pour que celui-ci montre non seulement l'utilisateur principal, mais également les autres personnes avec lesquelles il évolue.

L'article de A Sathiaseelan et al. : Cloudrone: Micro Clouds in The Sky, Cornell University Library, 201 Olin Library Cornell University, Ithaca, NY 14853, 27 avril 2016, décrit une implémentation de réseau WiFi à bas coût opérée à partir d'un drone en vol permettant de fournir une infrastructure d'accès à Internet dans des régions défavorisées. Le drone est piloté via ce même réseau WiFi et, du point de vue du réseau, il fait office de point d'accès AP (*Access Point*), au sens des spécifications WiFi, les utilisateurs étant tous desservis de façon indifférenciée à partir de ce point d'accès.

Le problème technique, dans le cas de la présente invention, réside dans la gestion des connexions de plusieurs terminaux (celui de l'utilisateur principal et ceux des autres utilisateurs présents avec lui), avec une interprétation appropriée des données échangées avec le drone pour éviter que le drone ne reçoive des commandes contradictoires issues de plusieurs terminaux qui lui sont connectés simultanément.

L'idée de base de l'invention consiste à établir un réseau local hiérarchisé à partir d'un point d'accès commun correspondant au drone, formant borne de concentration (par exemple un point d'accès AP au sens du réseau) et à partir duquel pourront se connecter plusieurs terminaux utilisateurs (chaque terminal étant par exemple configuré en station mobile STA au sens du réseau). Au moment de leur connexion au réseau, les différents terminaux s'enregistreront auprès du programme principal du drone, qui constitue un point de passage obligé et qui gèrera les priorités et niveaux de droits attribués aux différents utilisateurs, de manière à éviter toute contradiction notamment dans les instructions de pilotage reçues par le drone.

Plus précisément, l'invention propose à cet effet un réseau local du type général divulgué notamment par les documents ci-dessus référencés ainsi que par l'article précité de Sathiaseelan et al., c'est-à-dire un réseau permettant l'échange de données entre un drone et une pluralité de terminaux utilisateur semblables susceptibles d'établir successivement, de façon indifférenciée, une connexion au réseau local et de s'enregistrer dans une table d'enregistrement du drone, lesdites données comprenant des instructions de pilotage et de contrôle du drone et/ou un flux video.

Dans ce réseau connu, le drone comprend : des circuits de pilotage opérant en fonction desdites instructions de pilotage et de contrôle ; une caméra video embarquée délivrant le flux video ; et un émetteur/récepteur sans fil ; et un logiciel de gestion de réseau comprenant ladite table d'enregistrement de terminal(aux) distant(s).

De façon caractéristique de l'invention, ce réseau local est un réseau hiérarchisé entre :
- un terminal utilisateur principal disposant de droits permettant d'envoyer des instructions de pilotage et de contrôle au drone, et comprenant :
   - un émetteur/récepteur sans fil interfacé avec l'émetteur/récepteur du drone ;
   - un logiciel de gestion de réseau ; et
   - un logiciel applicatif apte i) à générer lesdites instructions de pilotage et de contrôle à transmettre au drone, et ii) à contrôler le logiciel de gestion de réseau pour établir une connexion au réseau local et enregistrer le terminal utilisateur principal dans la table d'enregistrement du drone, et
- au moins un terminal utilisateur secondaire passif comprenant :
   - un émetteur/récepteur sans fil interfacé avec l'émetteur/récepteur du drone ;
   - un logiciel de gestion de réseau ; et
   - un logiciel applicatif apte à contrôler le logiciel de gestion de réseau pour établir une connexion au réseau local et enregistrer le terminal utilisateur secondaire dans la table d'enregistrement du drone.

De plus, le réseau comporte des moyens de désignation, aptes à désigner comme terminal utilisateur principal l'un desdits terminaux utilisateur semblables, et comme terminaux utilisateur secondaires tous les autres terminaux utilisateur semblables.

Selon diverses caractéristiques subsidiaires avantageuses :
- le réseau est un réseau local de type infrastructure où le drone est configuré en point d'accès et le terminal utilisateur principal et le au moins un terminal utilisateur secondaire sont configurés en station mobile, le logiciel de gestion de réseau du drone étant un logiciel de point d'accès de réseau, et les logiciels de gestion respectifs du terminal utilisateur principal et du au moins un terminal utilisateur secondaire étant des logiciels de gestion de station mobile de réseau ;
- le réseau local est un réseau WiFi de type infrastructure selon IEEE 802.11, non modifié ;
- le logiciel applicatif du terminal utilisateur secondaire est un logiciel applicatif inapte à générer des instructions de pilotage et de contrôle à transmettre au drone ;
- le terminal utilisateur principal et/ou le terminal utilisateur secondaire sont aptes à générer des informations de capteur de terminal à transmettre au drone, notamment des informations de géolocalisation du terminal dans un repère terrestre.

Ces moyens de désignation peuvent être :
- des moyens mis en oeuvre par le logiciel de gestion de point d'accès de réseau du drone ;
- des moyens aptes à désigner comme terminal utilisateur principal le premier terminal utilisateur qui, chronologiquement, se connecte au réseau local et s'enregistre dans la table d'enregistrement du drone ;
- des moyens aptes à reconnaitre un terminal utilisateur dont le logiciel applicatif est un logiciel applicatif spécifique, différent des logiciels applicatifs des autres terminaux utilisateur, et à désigner ce terminal utilisateur comme terminal utilisateur principal ;
- des moyens aptes à reconnaitre un terminal utilisateur associé à un identifiant propre prédéterminé d'utilisateur, ou à un identifiant propre prédéterminé de terminal, et à désigner comme terminal utilisateur principal le terminal utilisateur ainsi reconnu.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale montrant un drone piloté par un appareil de télécommande.
La Figure 2 est une vue schématique montrant une pluralité d'utilisateurs avec chacun leur terminal connecté au drone.
La Figure 3 est un diagramme de flux montrant la séquence des étapes successives de connexion des terminaux au réseau du drone, et leur enregistrement auprès du programme principal de celui-ci.

On va maintenant décrire un exemple de réalisation de l'invention.

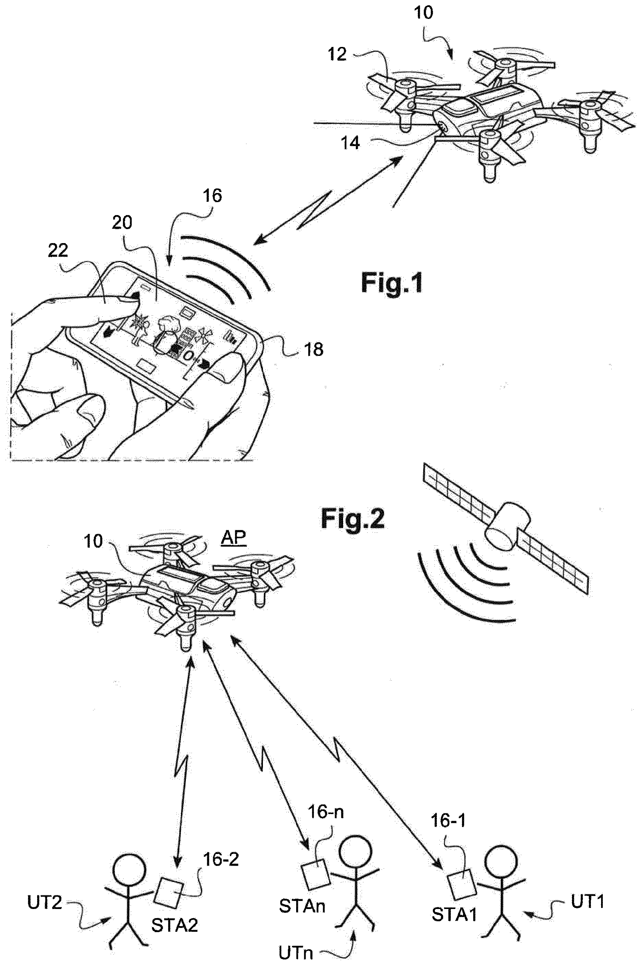

Sur la Figure 1, la référence 10 désigne de façon générale un drone, qui est par exemple un quadricoptère tel que le *Bebop* de Parrot SA. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle se dirige le drone, par exemple une caméra grand-angle haute définition munie d'un objectif à champ hémisphérique de type *fisheye* couvrant un champ d'environ 180° formant une image brute sur un capteur de résolution 14 Mpixel (4608 x 3288 pixels), ensuite fenêtrée en temps réel sur une image de qualité HD (1920 x 1080 pixels, soit 2 Mpixel), avec une fréquence de rafraichissement du flux video de 30 fps (image par seconde).

Le drone 10 est piloté par un appareil de télécommande distant 16, ci-après "terminal", tel qu'un téléphone ou tablette multimedia à écran tactile et accéléromètres intégrés, par exemple un *smartphone* de type *iPhone* (marque déposée) ou autre, ou une tablette de type *iPad* (marque déposée) ou autre.

Il s'agit d'un appareil standard, non modifié si ce n'est le chargement d'un logiciel applicatif tel que l'application mobile *Freeflight* (marque déposée) pour contrôler le pilotage du drone 10 et la visualisation des images prises par la caméra frontale embarquée 14.

Le terminal 16 comprend un corps 18 et un écran tactile 20 affichant l'image de la scène captée par la caméra frontale 14, avec en superposition un certain nombre de symboles permettant l'activation d'instructions de pilotage (montée/descente, etc.) par simple contact d'un doigt 22 de l'utilisateur sur les symboles affichés à l'écran. Le terminal 16 est également pourvu de capteurs d'inclinaison permettant de contrôler l'attitude du drone en imprimant à l'appareil des inclinaisons correspondantes selon des axes de roulis et de tangage pour le faire avancer ou reculer. Les actions de l'utilisateur sont interprétées par le logiciel applicatif, qui les transforme en instructions de pilotage à destination du drone. Le téléphone ou la tablette peut être éventuellement relayé par un équipement spécifique de télécommande tel que le *Skycontroller* de Parrot SA, qui est une console interfacée avec le téléphone ou la tablette se présentant sous forme d'un boitier muni de deux poignées avec des manches à balai et divers boutons destinés à permettre un pilotage ergonomique par l'utilisateur à la manière d'une console de télécommande dédiée.

La liaison de communication de données entre le drone 10 et le terminal 16 est très avantageusement une liaison de type WiFi standard (IEEE 802.11n) de type bibande (2,4 GHz/5 GHz) configurée de manière à constituer entre le drone 10 et le terminal 16 un réseau local de type infrastructure, hiérarchisé, où le drone opère en mode point d'accès (AP), c'est-à-dire en mode maitre pour le réseau, et le terminal 16 en mode station mobile (STA), c'est-à-dire en mode esclave sous le contrôle du drone.

Le réseau local est géré depuis le drone, qui incorpore un logiciel de gestion de réseau comprenant notamment une table d'enregistrement des stations mobiles susceptibles de se connecter à celui-ci.

Le réseau WiFi mis en oeuvre est avantageusement un réseau standard non modifié, ce qui permet de bénéficier des multiples fonctionnalités de la spécification WiFi : protection contre les collisions, encapsulation des données, gestion des accès au réseau, chiffrement et authentification, gestion du plan de fréquences, etc.

Dans un mode de fonctionnement *follow-me* conventionnel, le drone est piloté automatiquement de manière à assurer la poursuite d'un utilisateur unique, cet utilisateur étant la cible suivie par le drone dans ses évolutions et également vers laquelle pointe la caméra, qu'il s'agisse d'un pointage logiciel par un traitement de fenêtrage ou d'une caméra montée sur une nacelle orientable de type *gimbal* dont le mouvement mécanique est contrôlé par les servomoteurs.

Dans le contexte de l'invention, il s'agit de permettre à d'autres utilisateurs ("utilisateurs secondaires") de se connecter également au réseau WiFi du drone, en supplément de l'utilisateur ("utilisateur principal") connecté au drone et disposant des droits permettant d'envoyer des instructions de pilotage et de contrôle à ce dernier. En revanche, pour éviter tout conflit, les utilisateurs secondaires ne pourront pas envoyer d'instructions de pilotage au drone pour éviter que ce dernier ne reçoive des commandes contradictoires issues de plusieurs terminaux qui lui sont connectés simultanément..

Sur la Figure 2, on a désigné par UT1 l'utilisateur principal, qui détient un terminal 16-1, par exemple un *smartphone* rangé dans une poche.

Les utilisateurs secondaires UT2, ... UTn détiennent, de la même façon, chacun un terminal 16-2, ... 16-n permettant de les identifier auprès du réseau local WiFi géré par le drone.

Les terminaux des différents utilisateurs UT1, UT2, ... UTn, sont tous des terminaux configurés en station mobile STA1, STA2... STAn reliée par une liaison hertzienne au drone 10, configuré en point d'accès AP faisant fonction de concentrateur pour les différents terminaux des utilisateurs du réseau.

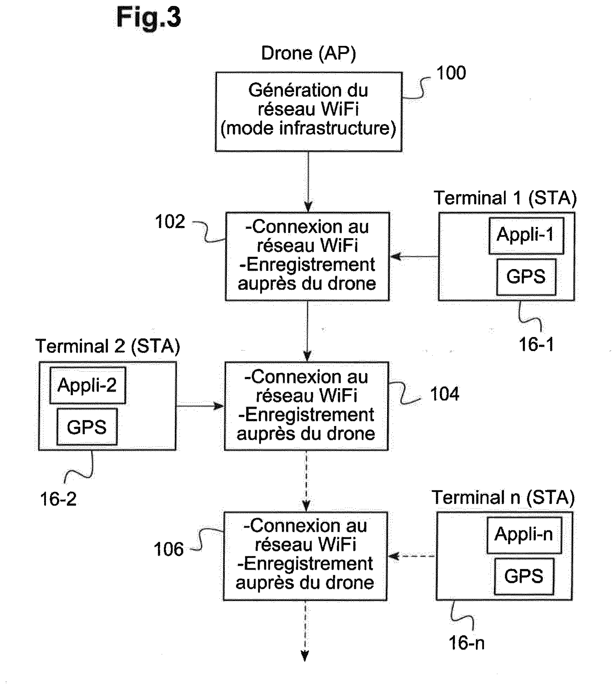

La Figure 3 illustre les étapes successives mises en oeuvre lors de la constitution du réseau multi-utilisateurs.

Le réseau local WiFi est établi à partir du drone, en mode infrastructure (bloc 100), celui-ci jouant le rôle de concentrateur pour les différentes stations mobiles du réseau.

L'étape suivante (bloc 102) consiste à établir une connexion par un premier terminal (ici le terminal utilisateur principal 16-1), qui détecte et sélectionne le réseau WiFi généré par le drone, selon un protocole standard de connexion à l'infrastructure WiFi. Une fois la connexion établie, le terminal s'enregistre auprès du programme principal de gestion de réseau du drone, ce qui permettra ensuite de piloter ce dernier en mode *follow-me* et d'orienter la caméra de façon appropriée.

Le terminal comporte avantageusement, outre le logiciel applicatif Appli-1, un module de géolocalisation GPS permettant de générer des informations de capteur GPS à transmettre au drone pour permettre une géolocalisation du terminal en tant que cible. Le terminal emporté par l'utilisateur fait ainsi fonction de *tracker*, dont les informations seront utilisées au sein du drone en complément du traitement video de détection de mouvement de cible pour assurer le cadrage et le suivi de la cible propre à la fonctionnalité *follow-me*.

Dans une étape ultérieure (bloc 104), un second terminal, référencé 16-2, détenu par un autre utilisateur, établit une connexion au réseau WiFi et s'enregistre également auprès du programme principal du drone. Une fois ces opérations effectuées, ce second terminal pourra, comme le premier, générer des informations de capteur GPS transmises au drone, par exemple pour permettre au drone de s'asservir dessus, déporter l'image pour que les deux utilisateurs soient visibles ensemble sur celle-ci, etc. L'opération de connexion au réseau WiFi et d'enregistrement auprès du drone peut être répétée (bloc 106) de la même façon, pour d'autres utilisateurs.

Si plusieurs terminaux se trouvent ainsi connectés au drone, il est nécessaire d'établir des priorités entre les données envoyées au drone, pour éviter des conflits d'instructions de pilotage et de contrôle du drone.

À cet effet, deux niveaux de droit sont définis :
- un niveau principal, réservé à l'utilisateur principal : celui-ci a la faculté d'envoyer des instructions de pilotage et de contrôle au drone, par exemple pour déclencher le mode automatique *follow-me* ou, inversement, reprendre la main pour un pilotage contrôlé du drone. Un seul utilisateur pourra se connecter sur ce niveau de droit (l'utilisateur principal) ; et
- un niveau secondaire, pour tous les autres utilisateurs. Ces utilisateurs seront des utilisateurs passifs, c'est-à-dire que, bien que n'ayant pas la faculté d'envoyer des commandes de pilotage au drone, ils resteront néanmoins connectés au réseau, avec la possibilité de recevoir le flux video en provenance de la caméra du drone, et/ou d'envoyer des informations de capteur au drone pour permettre à ce dernier de s'asservir dessus, par exemple des informations de capteur GPS permettant de contrôler l'orientation du drone et/ou cadrage lors de la prise de vue pour que tous les utilisateurs, principal et secondaire(s), soient inclus dans le champ de la caméra.

La gestion de ces deux niveaux de droit peut être opérée de diverses manières.

Une première mise en oeuvre consiste à charger dans les terminaux des logiciels applicatifs différents, respectivement pour le niveau principal et pour le niveau secondaire.

Une autre mise en oeuvre possible consiste, indépendamment du logiciel applicatif, à attribuer des droits sur la base "premier arrivé/premier servi", le premier terminal se connectant au réseau du drone étant considéré comme étant celui qui dispose du niveau principal, les suivants ne disposant que du niveau secondaire.

Une autre forme de mise en oeuvre possible consiste à attribuer le niveau principal à un terminal particulier, reconnu par le réseau à partir d'un identifiant propre reconnu comme "propriétaire" (par exemple un identifiant auprès d'un serveur *cloud* distant auprès duquel s'est enregistré l'utilisateur, ou bien un identifiant propre au terminal utilisé), disposant par défaut ainsi du niveau principal.

Ces différentes stratégies peuvent être appliquées de façon complémentaire, par exemple i) en prévoyant, outre le logiciel applicatif utilisé habituellement pour le pilotage du drone, un second logiciel applicatif dédié à la fonction *follow-me* en suivi secondaire, avec des fonctions de pilotage restreintes, donnant uniquement accès au niveau secondaire des droits, et, concurremment, ii) n'autoriser la connexion que d'un seul logiciel applicatif au niveau principal, sur la base premier arrivé/premier servi.

Une autre application combinée consiste à i) prévoir un unique logiciel applicatif, le même pour tous les terminaux, mais ii) à n'accorder par ordre de préférence les droits du niveau principal que soit à un terminal utilisateur prédéterminé reconnu par un identifiant propre (par exemple un identifiant auprès d'un serveur *cloud* distant auprès duquel s'est enregistré l'utilisateur) soit, à défaut, au premier terminal se connectant au réseau.

## Revendications

1. Un réseau local pour l'échange de données entre un drone (10) et une pluralité de terminaux utilisateur semblables susceptibles d'établir successivement, une connexion au réseau local et de s'enregistrer dans une table d'enregistrement du drone, lesdites données comprenant des instructions de pilotage et de contrôle du drone et/ou un flux video, réseau dans lequel :
- le drone (10) comprend :
• des circuits de pilotage opérant en fonction desdites instructions de pilotage et de contrôle ;
• une caméra video embarquée (14) délivrant le flux video ;
• un émetteur/récepteur sans fil ; et
• un logiciel de gestion de réseau comprenant ladite table d'enregistrement de terminal(aux) distant(s),
le réseau local comprenant :
- un terminal utilisateur principal (16-1) comprenant :
• un émetteur/récepteur sans fil interfacé avec l'émetteur/récepteur du drone ;
un logiciel de gestion de réseau ; et
• un logiciel applicatif (Appli-1) apte i) à générer des instructions de pilotage et de contrôle à transmettre au drone, et ii) à contrôler le logiciel de gestion de réseau pour établir une connexion au réseau local et enregistrer le terminal utilisateur principal dans la table d'enregistrement du drone, et
- au moins un terminal utilisateur secondaire (16-2 ; 16-n) comprenant :
• un émetteur/récepteur sans fil interfacé avec l'émetteur/récepteur du drone ;
• un logiciel de gestion de réseau ; et
• un logiciel applicatif (Appli-2 ; Appli-n) apte à contrôler le logiciel de gestion de réseau pour établir une connexion au réseau local et enregistrer le terminal utilisateur secondaire dans la table d'enregistrement du drone,
**caractérisé en ce que** ledit réseau local est un réseau hiérarchisé où :
- ledit terminal utilisateur principal (16-1) est un terminal disposant seul de droits permettant d'envoyer au drone lesdites instructions de pilotage et de contrôle, et
- chacun desdits au moins un terminal utilisateur secondaire (16-2 ; 16-n) est un terminal passif n'ayant pas la faculté d'envoyer au drone lesdites instructions de pilotage et de contrôle,
et **en ce que** ledit réseau local comporte des moyens de désignation, mis en oeuvre par ledit logiciel de gestion de réseau du drone, aptes à désigner comme terminal utilisateur principal l'un desdits terminaux utilisateur semblables, et comme terminaux utilisateur secondaires tous les autres terminaux utilisateur semblables.

2. Le réseau local de la revendication 1, dans lequel le réseau est un réseau local de type infrastructure où le drone est configuré en point d'accès (AP) et le terminal utilisateur principal et le au moins un terminal utilisateur secondaire sont configurés en station mobile (STA1, STA2... STAn), le logiciel de gestion de réseau du drone étant un logiciel de point d'accès de réseau, et les logiciels de gestion respectifs du terminal utilisateur principal et du au moins un terminal utilisateur secondaire étant des logiciels de gestion de station mobile de réseau.

3. Le réseau de la revendication 2, dans lequel le réseau local est un réseau WiFi de type infrastructure selon IEEE 802.11, non modifié.

4. Le réseau local de la revendication 1, dans lequel le logiciel applicatif (Appli-2 ; Appli-n) du terminal utilisateur secondaire est un logiciel applicatif inapte à générer des instructions de pilotage et de contrôle à transmettre au drone.

5. Le réseau local de la revendication 1, dans lequel le terminal utilisateur principal (Appli-1) et/ou le terminal utilisateur secondaire (Appli-2 ; Appli-n) sont aptes à générer des informations de capteur de terminal (GPS) à transmettre au drone.

6. Le réseau local de la revendication 5, dans lequel lesdites informations de capteur de terminal (GPS) comprennent une géolocalisation du terminal dans un repère terrestre.

7. Le réseau local de la revendication 1, dans lequel les moyens de désignation sont des moyens aptes à désigner comme terminal utilisateur principal le premier terminal utilisateur qui, chronologiquement, se connecte au réseau local et s'enregistre dans la table d'enregistrement du drone.

8. Le réseau local de la revendication 1, dans lequel les moyens de désignation sont des moyens aptes à reconnaitre un terminal utilisateur dont le logiciel applicatif est un logiciel applicatif spécifique, différent des logiciels applicatifs des autres terminaux utilisateur, et à désigner ce terminal utilisateur comme terminal utilisateur principal.

9. Le réseau local de la revendication 1, dans lequel les moyens de désignation sont des moyens aptes à reconnaitre un terminal utilisateur associé à un identifiant propre prédéterminé d'utilisateur, ou à un identifiant propre prédéterminé de terminal, et à désigner comme terminal utilisateur principal le terminal utilisateur ainsi reconnu.

## Patentansprüche

1. Lokales Netz für den Austausch von Daten zwischen einer Drohne (10) und einer Mehrzahl von ähnlichen Benutzer-Endgeräten, die in der Lage sind, nacheinander eine Verbindung mit dem lokalen Netz herzustellen und sich in eine Eintragungstabelle der Drohne einzutragen, wobei die Daten Anweisungen zum Lenken und Steuern der Drohne und/oder einen Videostrom enthalten, wobei in dem Netz:
- die Drohne (10) Folgendes umfasst:
• Lenkschaltungen, die in Abhängigkeit von den Lenk- und Steueranweisungen tätig sind;
• eine an Bord befindliche Videokamera (14) zum Ausgeben des Videostroms;
• einen drahtlosen Sender/Empfänger; und
• eine Netzverwaltungssoftware, welche die Tabelle zum Eintragen von entlegenen Endgerät(en) umfasst,
wobei das lokale Netz Folgendes umfasst:
- ein Hauptbenutzer-Endgerät (16-1), umfassend:
• einen drahtlosen Sender/Empfänger, der mit dem Sender/Empfänger der Drohne über Schnittstelle verbunden ist;
• eine Netzverwaltungssoftware; und
• ein Applikationssoftwareprogramm (Appli-1), das in der Lage ist, i) Lenk- und Steueranweisungen zu erzeugen, die an die Drohne zu übertragen sind, und ii) die Netzverwaltungssoftware zu steuern, um eine Verbindung mit dem lokalen Netz herzustellen und das Hauptbenutzer-Endgerät in die Eintragungstabelle der Drohne einzutragen, und
- mindestens ein Sekundärbenutzer-Endgerät (16-2; 16-n), umfassend:
• das einen drahtlosen Sender/Empfänger umfasst, der mit dem Sender/Empfänger der Drohne über Schnittstelle verbunden ist;
• eine Netzverwaltungssoftware; und
• ein Applikationssoftwareprogramm (Appli-2; Appli-n), das in der Lage ist, die Netzverwaltungssoftware zu steuern, um eine Verbindung mit dem lokalen Netz herzustellen und das Sekundärbenutzer-Endgerät in die Eintragungstabelle der Drohne einzutragen,
**dadurch gekennzeichnet, dass** das lokale Netz ein hierarchisiertes Netz ist, wo:
- das Hauptbenutzer-Endgerät (16-1) ein Endgerät ist, das nur über Rechte zum Senden der Lenk- und Steueranweisungen an die Drohne verfügt, und
- jedes des mindestens einen Sekundärbenutzer-Endgeräts (16-2; 16-n) ein passives Endgerät ist, das nicht berechtigt ist, die Lenk- und Steueranweisungen an die Drohne zu senden,
und dass das lokale Netz Benennungsmittel aufweist, die von der Netzverwaltungssoftware der Drohne verwendet werden und die in der Lage sind, als Hauptbenutzer-Endgerät eines der ähnlichen Benutzer-Endgeräte zu benennen und als Sekundärbenutzer-Endgeräte alle anderen ähnlichen Benutzer-Endgeräte zu benennen.

2. Lokales Netz nach Anspruch 1, wobei das Netz ein lokales Netz des Infrastrukturtyps ist, wo die Drohne als Zugangspunkt (AP) konfiguriert ist und das Hauptbenutzer-Endgerät und das mindestens eine Sekundärbenutzer-Endgerät als mobile Station (STA1, STA2... STAn) konfiguriert sind, wobei die Netzverwaltungssoftware der Drohne ein Netzzugangspunkt-Softwareprogramm ist und die jeweiligen Verwaltungssoftwareprogramme des Hauptbenutzer-Endgeräts und des mindestens einen Sekundärbenutzer-Endgeräts Netzmobilstation-Verwaltungssoftwareprogramme sind.

3. Netz nach Anspruch 2, wobei das lokale Netz ein WiFi-Netz des Infrastrukturtyps nach IEEE 802.11 ist, das nicht modifiziert ist.

4. Lokales Netz nach Anspruch 1, wobei das Applikationssoftwareprogramm (Appli-2; Appli-n) des Sekundärbenutzer-Endgeräts ein Applikationssoftwareprogramm ist, das nicht in der Lage ist, Lenk- und Steueranweisungen zu erzeugen, die an die Drohne zu senden sind.

5. Lokales Netz nach Anspruch 1, wobei das Hauptbenutzer-Endgerät (Appli-1) und/oder das Sekundärbenutzer-Endgerät (Appli-2; Appli-n) in der Lage sind, Endgerätesensor-Informationen (GPS) an die Drohne zu übertragen.

6. Lokales Netz nach Anspruch 5, wobei die Endgerätesensor-Informationen (GPS) eine Geolokalisierung des Endgeräts in einem terrestrischen Bezugssystem umfassen.

7. Lokales Netz nach Anspruch 1, wobei die Benennungsmittel Mittel sind, die in der Lage sind, als Hauptbenutzer-Endgerät das erste Benutzer-Endgerät zu benennen, das sich chronologisch mit dem lokalen Netz verbindet und sich in die Eintragungstabelle der Drohne einträgt.

8. Lokales Netz nach Anspruch 1, wobei die Benennungsmittel Mittel sind, die in der Lage sind, ein Benutzer-Endgerät zu erkennen, dessen Applikationssoftwareprogramm ein spezifisches Applikationssoftwareprogramm ist, das von den Applikationssoftwareprogrammen der anderen Benutzer-Endgeräte verschieden ist, und dieses Benutzer-Endgerät als Hauptbenutzer-Endgerät zu benennen.

9. Lokales Netz nach Anspruch 1, wobei die Benennungsmittel Mittel sind, die in der Lage sind, ein Benutzer-Endgerät zu erkennen, das einer eigenen vorbestimmten Benutzerkennung zugeordnet ist, oder einer eigenen vorbestimmten Endgerätekennung zugeordnet ist, und als Hauptbenutzer-Endgerät das so erkannte Benutzer-Endgerät zu benennen.

## Claims

1. A local network for the exchange of data between a drone (10) and a plurality of similar user terminals liable to successively establish a connection to the local network and to register into a registration table of the drone, said data comprising piloting and control instructions for the drone and/or a video stream, network in which:
- the drone (10) comprises:
• piloting circuits operating as a function of said piloting and control instructions;
• an on-board video camera (14) delivering the video stream;
• a wireless transceiver; and
• a network management software program comprising said table for the registration of the remote terminal(s),
the local network comprising:
- a main user terminal (16-1) comprising:
• a wireless transceiver interfaced with the drone transceiver;
• a network management software program; and
• an application software program (Appli-1) operable i) to generate piloting and control instructions to be transmitted to the drone, and ii) to control the network management software program to establish a connection to the local network and to register the main user terminal in the drone registration table, and
- at least one secondary user terminal (16-2; 16-n) comprising:
• a wireless transceiver interfaced with the drone transceiver;
• a network management software program; and
• an application software program (Appli-2; Appli-n) operable to control the network management software program to establish a connection to the local network and to register the secondary user terminal in the drone registration table,
**characterized in that** said local network is a hierarchical network in which:
- said main user terminal (16-1) is a terminal that has alone rights to send said piloting and control instructions to the drone, and
- each of said at least one secondary user terminal (16-2; 16-n) is a passive terminal that has not the faculty to send said piloting and control instructions to the drone,
and **in that** said local network includes designation means, implemented by said network management software program of the drone, operable to designate as the main user terminal one of said similar user terminals, and as secondary user terminals all the other similar user terminals.

2. The local network of claim 1, wherein the network is a local network of the infrastructure type in which the drone is configured as an access point (AP) and the main user terminal and the at least one secondary user terminal are configured as mobile stations (STA1, STA2... STAn), the network management software program of the drone being a network access point software program, and the respective management software programs of the main user terminal and of the at least one secondary user terminal being network mobile station management software programs.

3. The network of claim 2, wherein the local network is a WiFi network of the infrastructure type according to the non-modified IEEE 802.11.

4. The local network of claim 1, wherein the application software program (Appli-2; Appli-n) of the secondary user terminal is an application software program inoperable to generate piloting and control instructions to be transmitted to the drone.

5. The local network of claim 1, wherein the main user terminal (Appli-1) and/or the secondary user terminal (Appli-2; Appli-n) are operable to generate terminal sensor (GPS) information to be transmitted to the drone.

6. The local network of claim 5, wherein the said terminal sensor (GPS) information comprises a geolocation of the terminal in a terrestrial reference system.

7. The local network of claim 1, wherein the designation means are means operable to designate as a main user terminal the first user terminal to, chronologically, connect to the local network and register into a registration table of the drone.

8. The local network of claim 1, wherein the designation means are means operable to recognize a user terminal whose application software program is a specific application software program, different from the application software programs of the other user terminals, and to designate this user terminal as the main user terminal.

9. The local network of claim 1, wherein the designation means are means operable to recognize a user terminal associated with a predetermined proper user identifier, or with a predetermined proper terminal user, and to designate the so-recognized user terminal as the main user terminal.
